# DEMANDE DE BREVET EUROPEEN

(11) **EP 1 096 440 A1**
(43) Date de publication de la demande: **02.05.2001**
(21) Numéro de dépôt: 00402976.5
(22) Date de dépôt: 26.10.2000
(51) Int. Cl.: G07F 7/10

(54) **Support à microprocesseur pour stocker des données incluant un certificat de clé publique et procédé de transmission de certificats de clé publique**

(30) Priorité: 27.10.1999 FR 9913422
(71) Demandeur: SAGEM SA, 75116 Paris (FR)
(72) Inventeur: Chabanne, Hervé, 78200 Mantes la Jolie (FR); Courquin, Yannick, 95550 Bessancourt (FR)
(74) Mandataire: Bloch, Gérard

(57) **Abrégé**

Le support à microprocesseur (1) comporte des moyens mémoires (2, 3) de stockage de blocs de données incluant au moins un certificat de clé publique et comprenant une suite de champs de données. Les moyens mémoires (2, 3) comportent une série de zones, chacune réservée à une représentation unique de plusieurs champs identiques, et le microprocesseur (1) comporte des moyens d'adressage des zones des moyens mémoires (2, 3).

Pour transmettre les certificats, on ne transmet chaque champ de données qu'une seule fois et, après transmission, on recalcule les certificats.

## Description

La présente invention concerne les supports de données à microprocesseur, tels que cartes à puce, dont les données servent par exemple à valider des transactions, par exemple à la suite d'une commande de téléachat depuis un PC relié à un réseau informatique tel que l'Internet.

Si l'on reprend cet exemple, l'acheteur doit transmettre au vendeur un bon de commande électronique accompagné de la signature électronique de ce bon par l'acheteur, cette signature électronique étant calculée par une carte à puce en possession de l'acheteur, selon une norme, par exemple celle de National Institute of Standards and Technology, Gaithersburg, Maryland 20899, USA.

Par ailleurs, la signature électronique du bon de commande peut être vérifiée par le vendeur grâce à la clé publique de signature de l'acheteur qui dépend d'une clé privée de chiffrement nécessaire au calcul de la signature et qui est donc associée à cette clé privée. Pour éviter toute contestation quant à la validité de cette clé publique, elle est incluse dans un certificat émis selon une autre norme par une autorité de certification reconnue par tous.

Il est commode de stocker ce certificat dans la carte à puce de l'acheteur pour pouvoir le transmettre au vendeur en même temps que le bon de commande signé.

Un certificat comporte plusieurs champs de données indiquant, comme précisé ci-dessus, la clé publique du porteur de la carte accompagnée par son identité ainsi qu'une signature codée de l'ensemble des champs calculée par l'autorité de certification.

Une même carte peut porter plusieurs certificats, par exemple celui de son porteur et celui de l'autorité de certification. Or, un certificat présente un volume de données très important dont le stockage sur une simple carte à puce pose un problème de capacité mémoire.

La présente invention vise d'abord à simplifier le problème de stockage des données.

A cet effet, l'invention concerne tout d'abord un support de données à microprocesseur comportant des moyens mémoires de stockage de blocs de données incluant au moins un certificat de clé publique et comprenant une suite de champs de données, caractérisé par le fait que les moyens mémoires comportent une série de zones, chacune réservée à une représentation unique de plusieurs champs identiques, et le microprocesseur comporte des moyens d'adressage des zones des moyens mémoires.

Un certificat de vérification de clé publique, celui d'un porteur ou celui d'une autorité de certification, comporte :
- l'identification de la personne concernée (la personne certificataire - le porteur - ou l'autorité certifiante),
- l'identification de l'autorité certifiante,
- les dates de validité du certificat,
- la clé publique,
- les paramètres cryptographiques de la clé publique,
- la signature codée des champs ci-dessus composant le certificat, calculée par l'autorité de certification.

Ainsi, si la carte à puce comporte par exemple le certificat du porteur et le certificat de l'autorité certifiante, le champ d'identification de la personne concernée, qu'on retrouverait normalement plusieurs fois à cause du codage, le champ de l'autorité certifiante, qu'on trouve de toutes façons plusieurs fois, tout comme aussi les paramètres cryptographiques, qui peuvent être communs aux deux certificats, grâce à l'invention ne sont stockés qu'une seule fois.

En d'autres termes, l'invention s'affranchit des difficultés de la forte redondance des certificats et du fait que certains champs sont communs à plusieurs certificats.

De préférence, dans le support de données de l'invention, les zones des moyens mémoires sont organisées en au moins deux catégories dont une comprend des zones de stockage des champs de données utiles destinées à être exploitées par le support, comme par exemple la clé publique, les données d'identification et les paramètres cryptographiques de la clé des certificats de vérification.

Avantageusement, dans le support de données de l'invention, les moyens mémoires stockent, des données du certificat de clé publique, celles qui sont destinées à être exploitées par le support dans les zones des données destinées à être exploitées par le support ainsi qu'un pointeur des autres données du certificat dans les zônes des autres données.

Grâce à cela, on peut donc prévoir que les moyens d'adressage soient agencés pour que l'adressage des zones stockant les champs de données d'exploitation tels quels soit très simple.

Parallèlement au stockage, dans un support de données à microprocesseur, de données incluant des certificats de clé publique, la demanderesse entend également revendiquer un procédé de transmission de certificats de clé publique d'abord dans des canaux contraints, c'est-à-dire des canaux à faible bande passante, comme par exemple le canal de liaison d'une carte à puce et de l'ordinateur personnel destiné à son exploitation, puis, et plus généralement, dans tout canal de transmission, qu'il aboutisse au support de données ou qu'il en parte, par exemple vers un terminal de vendeur.

Le problème du stockage et celui de la transmission de données avec des certificats de vérification en fait n'en font qu'un, c'est un problème de capacité, de mémoire ou de bande passante - même dans des canaux non contraints.

La présente invention concerne donc également un procédé de transmission de certificats de clé publique comportant des champs de données dont certains sont répétés plusieurs fois, caractérisé par le fait qu'on ne transmet chaque champ de données qu'une seule fois et, après transmission, on recalcule les certificats.

Le calcul, ou la reconstitution des certificats, après transmission, s'effectue grâce à des données d'identification des champs.

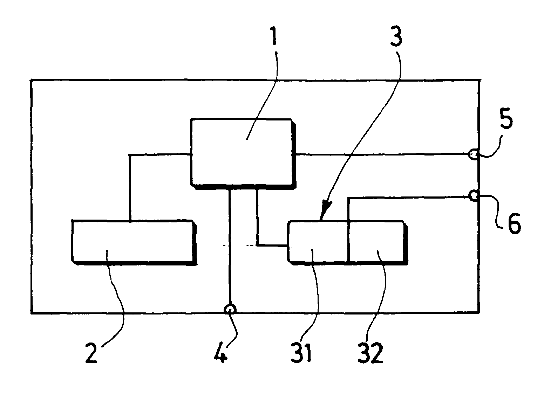

L'invention sera mieux comprise à l'aide de la description suivante de la forme de réalisation préférée du support de données de l'invention, en référence à la figure unique qui en représente un schéma-blocs.

Le support, qui est une carte à puce, comporte donc une puce représentée sur la figure, avec un microprocesseur 1, une première mémoire sécurisée 2 et une deuxième mémoire 3, un port d'entrée 4 et deux ports de sortie 5, 6. Le port d'entrée 4 et un port de sortie 5 sont reliés au microprocesseur 1, les deux mémoires sont reliées au microprocesseur ; la deuxième mémoire 3 est reliée au deuxième port de sortie 6.

La mémoire sécurisée contient la clé privée, nécessaire au calcul de la signature d'un bon de commande, pour reprendre l'exemple ci-dessus ; l'autre mémoire, qui comporte les zônes organisées en au moins deux catégories 31, 32, évoquées plus haut, contient donc, et notamment, la clé publique de signature incluse dans un certificat de vérification.

Pour transmettre un certificat, tel que constitué comme présenté par exemple ci-dessus, de la carte vers un ordinateur personnel, la carte étant placée dans un lecteur relié au PC, le PC requiert successivement du microprocesseur 1 les données des divers champs relatives à l'identification, aux dates, à la clé publique, aux paramètres cryptographiques de la clé et à la signature avant que le PC ne recalcule le certificat selon la norme, par exemple la norme X509 V3 de l'IUT-T ou la norme ISO/IEC 9594-8.

Pour la transmission du PC vers la carte, le PC transmet les divers champs de données associés respectivement à des données d'identification pour que le microprocesseur 1 puisse les affecter aux zones appropriées de la mémoire 3.

Considérant toujours le même exemple, pour passer une commande de téléachat, on place la carte à puce dans le lecteur du PC de l'acheteur qu'on relie au terminal du vendeur. Le bon de commande de l'acheteur est entré par le port 4 ; la signature électronique du bon de commande est transmise par le port 5 et la clé publique de signature, par le port 6.

On a vu plus haut que des données d'un certificat de vérification, seule une partie est exploitée par le support qui est la carte à puce et stockée dans une première catégorie de zônes 31 de la mémoire non sécurisée 3 de stockage des champs de données utiles destinées à être exploitées par le support.

L'autre partie, stockée dans une deuxième catégorie de zônes 32 de la mémoire non sécurisée, n'est que transportée par le support, pour que le certificat puisse être recalculé, ou reconstitué, après transmission par l'ordinateur personnel comme présenté ci-dessus.

Au lieu et place de ces autres données de certificat stockées dans la deuxième catégorie de zônes 32 de la mémoire non sécurisée 3, et simplement transportées, on peut imaginer de stocker un pointeur de ces autres données et de stocker ces données sur le PC, voire même sur un site ou un serveur d'un réseau informatique du type de l'Internet, le pointeur, après transmission, permettant de saisir ces données pour la reconstitution du certificat. Ainsi, après transmission, le PC, pour récupérer toutes les données nécessaires à la reconstitution du certificat de clé publique, devra mettre en oeuvre l'une des trois solutions : saisir les données non exploitées par la carte sur la carte elle-même, sur le PC lui-même, ou à une adresse Internet.

## Revendications

1. Support de données à microprocesseur (1) comportant des moyens mémoires (2, 3) de stockage de blocs de données incluant au moins un certificat de clé publique et comprenant une suite de champs de données, caractérisé par le fait que les moyens mémoires (2, 3) comportent une série de zones, chacune réservée à une représentation unique de plusieurs champs identiques, et le microprocesseur (1) comporte des moyens d'adressage des zones des moyens mémoires (2, 3).

2. Support de données selon la revendication 1, dans lequel les zones des moyens mémoires (3) sont organisées en au moins deux catégories (31, 32) dont une comprend des zones (31) de stockage des champs de données utiles destinées à être exploitées par le support.

3. Support de données selon la revendication 2, dans lequel les moyens mémoires (3) stockent, des données du certificat de clé publique, celles qui sont destinées à être exploitées par le support dans les zônes (31) des données destinées a être exploitées par le support ainsi qu'un pointeur des autres données du certificat dans les zônes (32) des autres données.

4. Procédé de transmission de certificats de clé publique comportant des champs de données dont certains sont répétés plusieurs fois, caractérisé par le fait qu'on ne transmet chaque champ de données qu'une seule fois et, après transmission, on recalcule les certificats.
